# EUROPEAN PATENT APPLICATION

(11) **EP 1 693 817 A1**
(43) Date of publication of application: **23.08.2006**
(21) Application number: 04820145.3
(22) Date of filing: 30.11.2004
(51) Int. Cl.: G09C 1/00, H04L 9/22, G06F 7/58

(54) **ENCRYPTION/DECRYPTION SYSTEM, DEVICE, AND METHOD**

(30) Priority: 11.12.2003 JP 2003412965
(71) Applicant: Buffalo Inc., Nagoya-shi, Aichi 457-8520 (JP)
(72) Inventor: ISHIDOSHIRO, Takashi, Buffalo Inc., Nagoya-shi, Aichi 4578520 (JP)
(74) Representative: Cloughley, Peter Andrew
(86) International application number: PCT/JP2004/017764
(87) International publication number: WO 2005/057525

(57) **Abstract**

Disclosed are an encryption/decryption system and encryption/decryption equipment which suppress the adverse effect of a load on arithmetic and logic operations to be performed by a computer, whose cipher system is hard to infer, which provide great security, and which eliminate the labor of managing keys or entering a key. A security key 10 that encrypts or decrypts data using random numbers generated by a thermal noise random number generator 10e is detachably attached to a personal computer 11. When attached to the personal computer 11, the security key 10 autonomously encrypts or decrypts data to be handled by the personal computer 11. In other words, encryption/decryption equipment employing the thermal noise random number generator is detachably attached to a computer. The encryption/decryption equipment can be used as easily as keystrokes are made, and great security can be guaranteed.

## Description

### Technical Field

The present invention relates to an encryption/decryption system, encryption/decryption equipment, and an encryption/decryption method in which the encryption/decryption equipment is attached to a computer in order to encrypt or decrypt data to be handled by the computer.

### Background Art

In recent years, an encryption/decryption technology for encrypting data at the time of preserving the data in a computer or transmitting the data over a network or the like or for decrypting data so as to learn the contents of the data has been widely employed in order to guarantee security.

Typical encryption/decryption technologies are generally known as a common key cipher system and a public key cipher system as disclosed in Japanese Unexamined Patent Application Publication No. 2001-308843. The common key cipher system is such that a local side and a remote side share the same cipher key to encrypt or decrypt data. The other system, that is, the public key cipher system has become a mainstream these days. The public key cipher system is characterized in that: two keys, that is, a secret key and a public key are used to encrypt or decrypt data; and data encrypted using either of the secret key and public key cannot be decrypted without the other key.

However, the two key cipher systems have a drawback described below. Namely, according to the key cipher systems, software installed in a computer is run in order to produce random numbers using a certain arithmetic process or a certain combination of functions, and the random numbers are used to encrypt or decrypt data. The random numbers are called pseudo-random numbers that suffer from regularity deriving from cyclic production. Moreover, since the cycle in which each of the pseudo-random numbers reappears is finite, the pseudo-random numbers cannot be said to be real random numbers. The cipher system adopted for ciphertext produced based on the pseudo-random numbers is easily inferred and the ciphertext is easily decrypted. Thus, the key cipher systems are unsatisfactory in terms of secrecy.

If an arithmetic process or a combination of functions described in software is made complex, security improves. However, a load on software greatly increases. There is a fear that the increase in the load may hinder arithmetic and logic operations to be performed in a computer.

Furthermore, if locally procurable software is adopted as software for producing random numbers, or if a computer in which the software for producing random numbers is installed is stolen, the software may be readily analyzed.

Moreover, the keys must be managed. Every time data is encrypted or decrypted, the key must be entered. This is labor-intensive.

### Disclosure of the Invention

The present invention addresses the foregoing problems. An object of the present invention is to provide an encryption/decryption system, encryption/decryption equipment, and an encryption/decryption method which suppresses the adverse effect of a load on arithmetic and logic operations to be performed in a computer, whose adopted cipher system is hard to infer, which guarantees great security, and which eliminates the labor of managing keys or entering a key.

In order to solve the aforesaid problems, the present invention provides an encryption/decryption system comprising a computer, and external hardware that can be externally attached to or detached from the computer, that juts out of the computer when attached to the computer, and that can bi-directionally communicate with the computer. The external hardware comprises: a first universal serial bus (USB) connector; a first USB interface circuit that performs bidirectional communication via the first USB connector at a data transfer rate stipulated in the USB standard; and a hardware encryption/decryption circuit that transfers data via the USB interface circuit, that encrypts data in response to a request for encryption, and that decrypts data in response to a request for decryption. The computer comprises: a second USB connector; a second USB interface circuit that performs bidirectional communication via the second USB connector at a data transfer rate stipulated in the USB standard; and an encryption/decryption control means that transmits or receives data to or from the hardware encryption/decryption circuit incorporated in the USB-compatible external hardware when the data is required to be encrypted or decrypted, that informs the hardware encryption/decryption circuit of the contents of processing, and that instructs the hardware encryption/decryption circuit to perform encryption or decryption.

According to the present invention having the foregoing constituent features, data is encrypted or decrypted using the external hardware instead of software. Consequently, the load on arithmetic and logical operations to be performed in the computer can be reduced, and ciphertext is hard to analyze. Furthermore, the external hardware juts out of the computer when attached to the computer. When the computer is unused, the external hardware can be easily and reliably detached. The security of data encrypted as easily as keystrokes are made can be guaranteed.

As mentioned above, encryption/decryption equipment employing a thermal noise random number generator is attachable or detachable to or from a computer. The encryption/decryption equipment can be operated as easily as keystrokes are made, and great security is guaranteed.

According to another aspect of the present invention, there is provided encryption/decryption equipment that is externally attached or detached to or from a computer, that juts out of the computer when attached to the computer, and that can bi-directionally communicate with the computer. The encryption/decryption equipment comprises a first USB connector, a first USB interface circuit that performs bidirectional communication via the first USB connector at a data transfer rate stipulated in the USB standard, and a hardware encryption/decryption circuit that transfers data via the USB interface circuit, that encrypts data in response to a request for encryption, and that decrypts data in response to a request for decryption.

According to the present invention having the foregoing constituent features, data is encrypted or decrypted using the hardware encryption/decryption circuit instead of software. Consequently, a load on arithmetic and logic operations to be performed in the computer diminishes, and ciphertext becomes hard to analyze. Furthermore, since the encryption/decryption equipment juts out of the computer when attached to the computer, when the computer is unused, the encryption/decryption equipment can be easily and reliably detached. The security of data encrypted as easily as keystrokes are made can be guaranteed.

According to another aspect of the present invention, a physical random number generator is included for generating random numbers by hardware. The hardware encryption/decryption circuit uses random numbers generated by the physical random number generator to encrypt or decrypt data.

According to the present invention having the foregoing constituent feature, random numbers generated by the physical random number generator are used. Therefore, analysis of ciphertext can be made harder to do than it is when pseudo-random numbers are used. Consequently, great security can be guaranteed.

According to another aspect of the present invention, the physical random number generator generates random numbers according to thermal noise caused by semiconductor devices or resistive elements incorporated in the encryption/decryption equipment.

According to the present invention having the foregoing constituent feature, since thermal noise is employed, analysis of ciphertext can be easily and reliably made hard to do. Consequently, great security can be guaranteed.

According to another aspect of the present invention, the encryption/decryption equipment is directly attached or detached to or from the computer. The encryption/decryption equipment comprises the first USB connector in which the first USB interface circuit is incorporated, and a main key body which is attachable or detachable to or from the first USB connector and in which the hardware encryption/decryption circuit is incorporated. The main key body is always attachable or detachable to or from the first USB connector, which is inserted into the computer, irrespective of whether the computer is activated or the kind of operating system installed in the computer.

According to the present invention having the foregoing constituent feature, the encryption/decryption equipment is easily attached or detached to or from the computer by attaching or detaching the main key body irrespective of whether the computer is activated or the kind of operating system installed in the computer. Consequently, great security can be readily guaranteed.

According to another aspect of the present invention, the computer includes an encryption/decryption control means that transmits or receives data to or from the attached encryption/decryption equipment when required, and that issues an encryption request or a decryption request. When the encryption/decryption equipment is attached to the computer, data to be handled in the computer is forcibly passed through the encryption/decryption equipment by the encryption/decryption control means having sensed the attachment. Data to be preserved in the computer using the computer or data to be preserved outside the computer via the computer is automatically encrypted without the necessity of performing any other manipulations, and then preserved. On the other hand, data encrypted and preserved in the computer or outside the computer via the computer is automatically decrypted without the necessity of performing any other manipulations, and then utilized.

According to the present invention having the foregoing constituent feature, once the encryption/decryption equipment is attached to the computer, data is automatically encrypted and then preserved by performing normal manipulations alone without the necessity of performing any other manipulations, and security is guaranteed. On the other hand, data to be utilized is automatically decrypted. Thus, data can be utilized readily.

According to another aspect of the present invention, the encryption/decryption equipment serves as a security key that is easy to carry and that, only when attached to the computer, decrypts data already encrypted or preserved in the computer or preserved outside the computer via the computer so that the data can be utilized.

According to the present invention having the foregoing constituent feature, a portable security key is provided, and security is readily, easily, and reliably guaranteed.

According to another aspect of the present invention, the encryption/decryption equipment includes an authentication facility that helps authorize access to the computer to which the encryption/decryption equipment is attached or access to a network via the computer.

According to the present invention having the foregoing constituent feature, the security of access to the computer or to a network via the computer can be easily and reliably guaranteed.

According to another aspect of the present invention, the authentication facility included in the encryption/decryption equipment registers as an authentication key data of a serial number that is unique to and assigned in advance to the encryption/decryption equipment, data of a serial number that is unique to and assigned in advance to a CPU included in a computer, or data of a serial number that is unique to and assigned in advance to a USB. The authentication facility transmits the registered authentication key to a computer to which the encryption/decryption equipment is attached or receives data from the computer so that the registered authentication key and data can be collated with each other. Consequently, whether the computer should be made accessible and usable is determined.

According to the present invention having the foregoing constituent feature, data of a serial numbers is used to easily and reliably guarantee security.

According to another aspect of the present invention, the authentication facility incorporated in the encryption/decryption equipment includes an authentication key production means for producing an authentication key on the basis of time instant information. Only when the encryption/decryption equipment is attached to a computer, the authentication key produced by the authentication key production means is transmitted to the computer to which encryption/decryption equipment is attached, and data is received from the computer. The authentication key and data are collated with each other. Consequently, whether the computer should be made accessible and usable is determined.

According to the present invention having the foregoing constituent feature, security can be easily guaranteed using time instant information.

According to another aspect of the present invention, time instant information used by the authentication key production means is acquired by accessing a clock incorporated in a computer to which the encryption/decryption equipment is attached, or an network time protocol (NTP) server or an SNTP server on a network on which the computer is connected.

According to the present invention having the foregoing constituent feature, the encryption/decryption equipment need not include a clock, but security can be easily guaranteed.

According to another aspect of the present invention, the encryption/decryption equipment includes an authentication facility that helps authorize use of the encryption/decryption equipment itself. Only a person authenticated by the authentication facility can operate the encryption/decryption equipment attached to a computer.

According to the present invention having the foregoing constituent feature, the authentication facility restricts use of the encryption/decryption equipment itself. Consequently, greater security can be guaranteed.

According to another aspect of the present invention, the authentication facility that helps authorize use of the encryption/decryption equipment itself is realized with a fingerprint collation facility. A fingerprint is collated with a fingerprint registered in advance. Only an authenticated person whose fingerprint is agreed with a registered one can operate the encryption/decryption equipment attached to a computer.

According to the present invention having the foregoing feature, great security can be easily and reliably guaranteed owing to fingerprint collation.

According to another aspect of the present invention, a computer having the encryption/decryption equipment attached thereto is connected to any other computer or peripheral equipment over a network. Data transmitted or received to or from any other computer or peripheral equipment over the network is encrypted by the encryption/decryption equipment.

According to the present invention having the foregoing feature, encrypted data is transmitted or received over a wireless LAN. Even when data transmitted or received over the wireless LAN is intercepted, since the data is encrypted, great security can be guaranteed. In this case, the network encompasses the wireless LAN, a wired LAN, and other various kinds of networks.

As mentioned above, data is encrypted or decrypted using the hardware encryption/decryption circuit instead of software. Thus, a load on arithmetic and logic operations to be performed in the computer diminishes, and ciphertext becomes hard to analyze. This need not be manifested as equipment that is an entity but may be provided as a method to be implemented in the equipment. There is therefore provided an encryption/decryption method for encryption/decryption equipment comprising a first USB connector, a first USB interface circuit that performs bidirectional communication via the first USB connector at a data transfer rate stipulated in the USB standard, and a hardware encryption/decryption circuit that is connected to the USB interface circuit and encrypts or decrypts data. According to the encryption/decryption method, the encryption/decryption equipment is externally attached to or detached from a computer, and juts out of the computer when attached to the computer. The encryption/decryption equipment bi-directionally communicates with the computer, and transfers data to or from the computer via the USB interface circuit. In response to a request for encryption, data is encrypted. In response to a request for decryption, data is decrypted.

In short, the present invention is not limited to equipment that is an entity but may be provided as a method to be implemented in the equipment.

### Brief Description of the Drawings

[Fig. 1] Fig. 1 is a perspective view showing the appearance of the first embodiment of the present invention.
[Fig. 2] Fig. 2 is a perspective view showing the appearance of the first embodiment of the present invention.
[Fig. 3] Fig. 3 is a schematic functional diagram concerning the first and fourth embodiments of the present invention.
[Fig. 4] Fig. 4 is a schematic functional diagram concerning the second embodiment of the present invention.
[Fig. 5] Fig. 5 is a perspective view showing the appearance of the second embodiment of the present invention.
[Fig. 6] Fig. 6 is a schematic front view showing the third embodiment of the present invention.

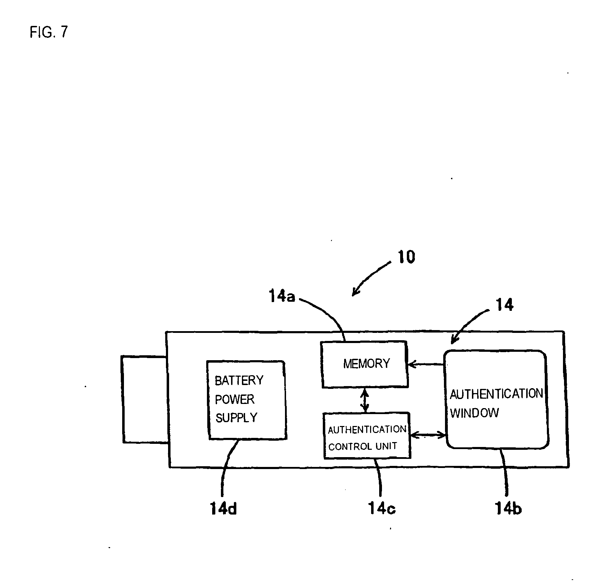

[Fig. 7] Fig. 7 is a schematic front view showing the fifth embodiment of the present invention.

### Best Mode for Carrying Out the Invention

Embodiments of the present invention will be described below.

### (First Embodiment)

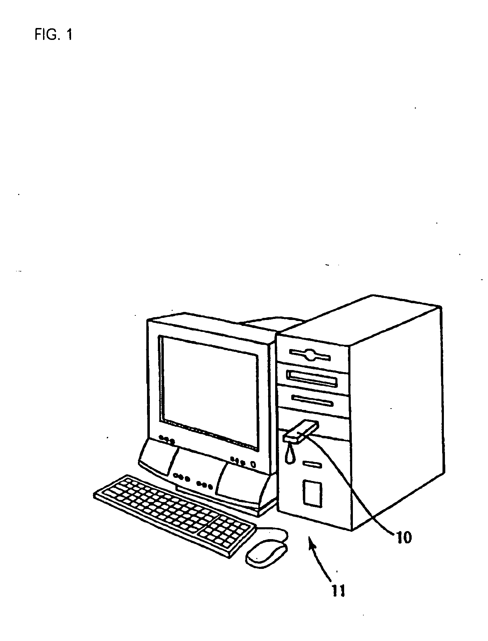

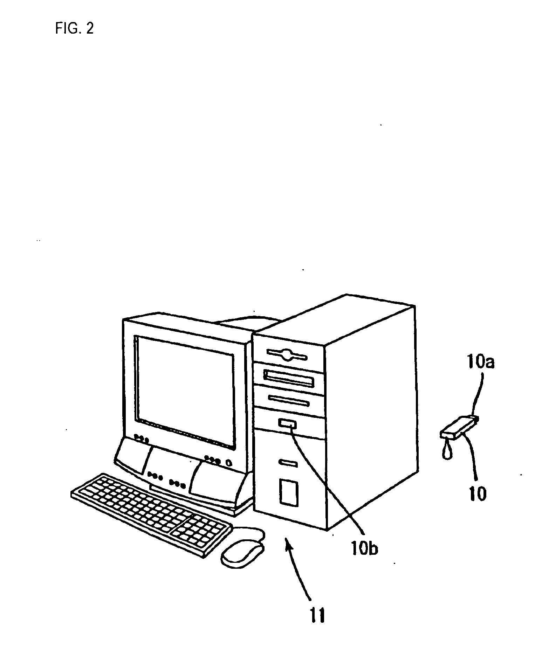

As shown in Fig. 1 and Fig. 2, a security key 10 serving as encryption/decryption equipment and external hardware is detachably attached to a personal computer 11 that is a computer. The security key 10 is shaped substantially like a parallelepiped having a size of, for example, 5 cm by 2 cm by 1 cm. The security key 10 has the size and shape ensuring ease of carrying it together with keys or the like in a daily life. The surface of the security key is covered with, for example, a resin housing. Circuits and other members that will be described later are incorporated in the security key 10. A first USB connector 10a is formed at one end of the housing shaped substantially like a parallelepiped. The first USB connector 10a is joined with a second USB connector 10b formed in a main unit of the personal computer 11. The other end of the housing juts out of the main body of the personal computer 11. Since the security key 10 juts out of the personal computer 11 when attached thereto, a user of the personal computer 11 (security key 10) recognizes that the security key 10 is in use, and is prevented from forgetting to detach the security key 10 when the user finishes using the personal computer 11 or temporarily leaves his/her seat. Moreover, since the security key 10 juts out of the personal computer 11 when attached thereto, the user can easily detach the security key 10.

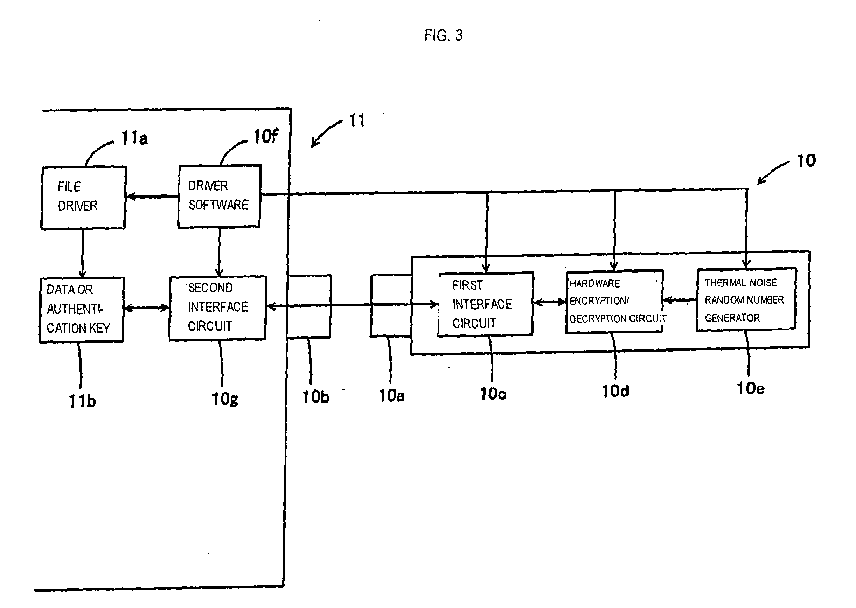

As shown in Fig. 3, a first USB interface circuit 10c, a hardware encryption/decryption circuit 10d, and a thermal noise random number generator 10e serving as a physical random number generator are, as described later, incorporated in the security key 10. Moreover, the personal computer 11 includes a second USB interface circuit 10g. Driver software 10f serving as an encryption/decryption control means is installed from, for example, a recordable CD into the personal computer 11.

The thermal noise random number generator 10e included in the present embodiment uses thermal noise caused by semiconductors incorporated in the security key 10 to generate random numbers. Based on the random numbers, the hardware encryption/decryption circuit 10d encrypts or decrypts data 11b transmitted or received to or from the personal computer 11.

The first USB interface circuit 10c and second USB interface circuit 10g allow the personal computer 11 and security key 10 respectively to transmit or receive data to or from each other via the first USB connector 10a and second USB connector 10b respectively at a data transfer rate stipulated in the USB standard.

When the attachment of the security key 10 to the personal computer 11 is detected, the driver software 10f controls the USB interface circuits 10c and 10g and an OS file driver 11a so that data files 11b to be handled by the personal computer 11 after the security key is attached to the computer will be forcibly passed through the security key 10 via the USB connectors 10a and 10b.

At the same time, when the data 11b to be transmitted or received is a data file that has already been encrypted according to a cipher system supported by the security key 10 and that will be opened, the driver software 10f controls the hardware encryption/decryption circuit 10d so that the data will be decrypted based on random numbers generated by the thermal noise random number generator 10e. On the other hand, when the data to be transmitted or received is not encrypted but is preserved or transmitted to any other personal computer or peripheral equipment connected to the personal computer 11 over a network, the driver software 10f controls the hardware encryption/decryption circuit 10d so that the data will be encrypted based on random numbers generated by the thermal noise random number generator 10e.

The security key 10 should merely be attached or detached to or from the personal computer 11 in the same manner as keystrokes are made in a daily life, but any other special manipulations need not be performed, though the driver software 10f must be installed in the personal computer 11 in advance. The security key 10 autonomously encrypts or decrypts the data 10b after being attached to the personal computer 11.

The security key 10 is, as mentioned above, USB-compatible and attached or detached to or from the personal computer 11 via the USB connectors 10a and 10b. Power is supplied from the main unit of the personal computer 11 to the security key 10 over a power line contained in a USB. The security key 10 need not include a battery or any other power supply in the body thereof and is therefore lightweight and low-cost. Since the security key 10 is identified by a plug-and-play facility that is supported by the USB standard, it can be attached or detached to or from the personal computer 11 at any time irrespective of whether the personal computer 11 is started up, though it cannot when a certain OS is installed in the personal computer 11. The security key 11 can be attached or detached to or from the personal computer 11 in the same manner as keystrokes are made in a daily like without the necessity of caring about the personal computer 11.

The structure of the security key 10 has been mainly described so far. Next, actions to be performed in the security key 10 in practice will be described below.

For example, assume that an application is run in the personal computer 11 in order to create and preserve a data file 11b. In this case, first, a worker inserts his/her own security key 10 into the second USB connector 10b in the personal computer 11. At this time, the OS in the personal computer detects that the security key 10 is inserted into the USB connector 10b. Responsively to the detection, the driver software 10f extends control so that all data files 11b to be handled thereafter will pass through the security key 10. When the worker performs manipulations to preserve a data file 11b in the personal computer 11, the driver software 10f controls the USB interface circuits 10c and 10g and OS file driver 11a so as to return the data 11b to the hardware encryption/decryption circuit 10d included in the security key 10. At the same time, the driver software 10f controls the hardware encryption/decryption circuit 10d so that the hardware encryption/decryption will encrypt the data. The hardware encryption/decryption circuit 10d in turn encrypts the data using random numbers generated by the thermal noise random number generator 10e. The driver software 10f controls the USB interface circuits 10c and 10g and OS file driver 11a so as to return the encrypted data 11b to the personal computer 11 via the USB connectors 10a and 10b. The data is then preserved in a predetermined storage device such as a hard disk in the personal computer 11. Processing is then terminated.

On the other hand, in order to open a data file 11b that has already been encrypted according to a cipher system supported by the security key 10 and preserved in the personal computer 11, a worker inserts his/her own security key 10 into the second USB connector 10b in the personal computer 11 employed. At this time, the OS in the personal computer 11 detects that the security key 10 is inserted into the USB connector 10b. Responsively to the detection, the driver software 10f extends control so that all data files 11b to be handled thereafter will pass through the security key 10. When the worker performs manipulations to read the encrypted data file 11b, the driver software 10f controls the USB interface circuits 10c and 10g and OS file driver 11a so as to return the data 11b to the hardware encryption/decryption circuit 10d in the security key 10 via the USB connectors 10a and 10b. At the same time, the driver software 10f controls the hardware encryption/decryption circuit 10d so that the hardware encryption/decryption circuit 10d will decrypt the data. The hardware encryption/decryption circuit 10d in turn decrypts the data using random numbers generated by the thermal noise random number generator 10e. The driver software 10f controls the USB interface circuits 10c and 10g and OS file driver 11a so as to return the decrypted data 11b to the personal computer 11 via the USB connectors 10a and 10b. Thereafter, normal reading is executed.

As mentioned above, the hardware encryption/decryption circuit 10d included in the security key 10 encrypts or decrypts data using random numbers generated by the thermal noise random number generator 10e. Compared with conventional encryption or decryption performed by software using pseudo-random numbers, ciphertext becomes very hard to analyze. Consequently, great security can be guaranteed.

The security key 10 is externally attached or detached to or from the personal computer 11. Unlike a conventional case where encryption/decryption software is installed in a personal computer, if the personal computer 11 should be stolen, ciphertexst is hard to analyze.

Furthermore, the security key 10 uses hardware. Compared with the conventional case where encryption/decryption software is installed in a personal computer, a load of arithmetic and logic operations on the personal computer 11 diminishes.

Furthermore, the security key 10 juts out of the personal computer 11 when detachably attached to the personal computer 11, and is compact and lightweight so as to be easy to carry. When the personal computer 11 is unused, the security key 10 is easily and reliably detached. The security of data 11b encrypted as carelessly as keystrokes are made can be guaranteed.

Furthermore, once the security key 10 is attached to the personal computer 11, any other manipulations need not be performed but ordinary manipulations alone should be performed. Nevertheless, the data 11b can be easily preserved, read, or utilized.

Noted is that the present invention is not limited to the constituent features of the foregoing embodiment but the constituent features can be appropriately modified as described below.

The present invention has been described on the assumption that a personal computer is adopted as a computer. The present invention is not limited to the personal computer. Any computer other than the personal computer will do. For example, a server, an office computer, or a portable computer such as a personal digital assistant (PDA) will do. Namely, the present invention can be applied to various pieces of equipment that have an arithmetic and logic facility and can control encryption or decryption with the security key attached thereto.

As for the personal computer, the personal computer may be of a desktop type or a notebook type.

According to the present embodiment, once the security key is attached to a personal computer, all data tiles to be handled by the personal computer are automatically encrypted or decrypted. However, the present invention is not limited to this mode. Control may be extended so that a worker can select whether each data file to be handled is encrypted or decrypted. In this case, workability deteriorates. However, each data file can be optimally handled according to the property thereof.

Otherwise, a file format or a type of file to be subjected to encryption or decryption may be able to be determined in advance. For example, a setting may be determined so that only when a file has a specific filename extension, filename, or file size, encryption or decryption will be executed.

As a thermal noise source required for the thermal noise random number generator, built-in semiconductors or resistors may be utilized or a dedicated device may be incorporated additionally.

The driver software may be installed from not only a recordable CD but also any other medium. Furthermore, the driver software may be installed from any other computer over the Internet or a network.

The driver software is not necessarily installed in advance. Alternatively, for example, the driver software may be preserved in a storage medium incorporated in the security key. When the security key is attached to a personal computer, the driver software may be installed in the personal computer. Furthermore, the necessity of the installation work may be obviated. Namely, the driver software may be automatically installed when the security key is attached to the personal computer.

After work is completed using the personal computer, when the OS is terminated, an indication alarming a worker for fear the worker may forget to detach the security key may be displayed on the screen of the personal computer. Otherwise, an indicator may be included in the main security key body and lit for alarming. Otherwise, an alarming sound may be radiated.

Data to be handled by the personal computer is not necessarily data being preserved in the storage device in the personal computer or data to be preserved therein. Alternatively, for example, the data to be handled by the personal computer may be data being preserved in a storage device or medium placed outside the personal computer or data to be preserved therein. Furthermore, the present invention may be applied to data being preserved in any other personal computer, server, or network-attached storage (NAS) device, which is connected on a network, via the personal computer or data to be preserved therein.

The shape and size of the security key in accordance with the present invention, and the material of the housing are introduced as mere examples. The present invention is not limited to them. Preferably, the security key has a shape and a size permitting a user to easily carry it because of the nature of a key. For example, the security key may be structured to be folded at the time of carrying it.

When the personal computer to which the security key is attached is of a notebook type, the security key may have a shape allowing the security key to project between a keyboard and a display panel when the security key is attached to the personal computer. In this case, when work being performed using the personal computer is completed and the display panel is about to be closed, the projecting security key interferes with the closing. Consequently, a user is prevented from forgetting to detach the security key. Otherwise, the main body of the security key and a worker may be linked with a string or the like in efforts to prevent the worker from forgetting to detach the security key.

- The position of the USB connector in the security key is not limited to the end of the security key but may be any other position.

- The surface of the security key is not necessarily armored with a housing as it is in the present embodiment. Alternatively, for example, the surface may be sealed with a resin, or any other structure may be adopted.

- When an attachment is transmitted together with an e-mail message over the Internet, the attachment may be encrypted using the security key. In this case, a receiving side should own the security key so that the encrypted attachment can be decrypted.

- A battery power supply and a radio transmission/reception facility that encrypts or decrypts data may be added to the security key. In this case, the security key is not attached to a personal computer but a worker merely owns the security key and performs work using the personal computer. Consequently, data is automatically encrypted or decrypted as it is in the present embodiment.

- The present embodiment may be designed as an encryption/decryption system but not as the encryption/decryption equipment (security key). The same applies to the subsequent embodiments.

### (Second Embodiment)

In the present embodiment, a personal computer 11 to which a security key 10 is attached is connected to any other personal computer, server, or NAS device via a wireless local area network (LAN) for the purpose of data transmission or reception.

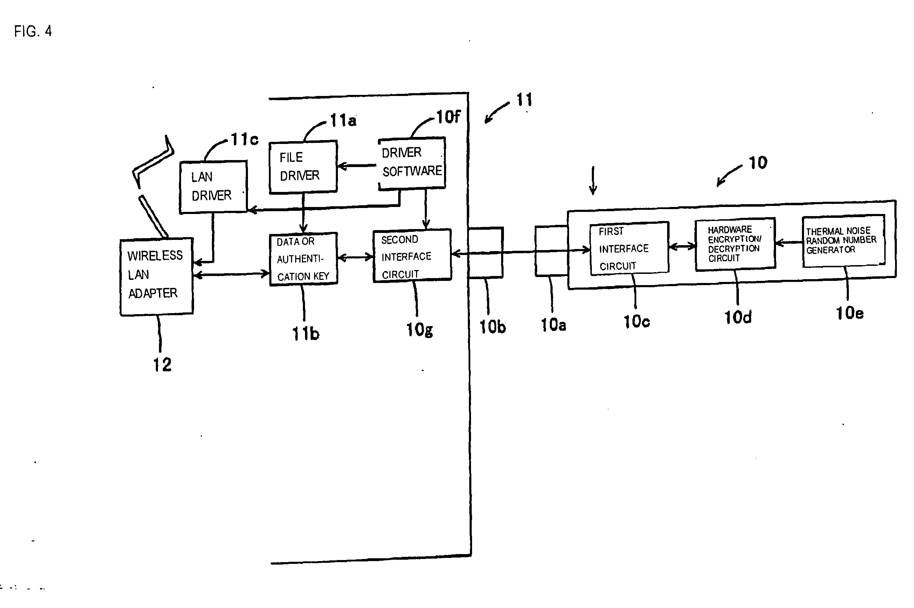

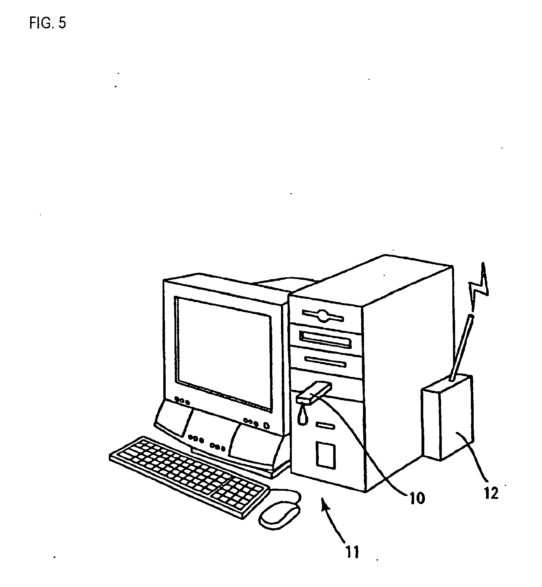

As shown in Fig. 4 and Fig. 5, a wireless LAN adapter 12 is connected to the personal computer 11. The personal computer 11 transmits or receives data to any other personal computer, server, or NAS device, which is not shown and connected on a network, via the wireless LAN adapter 12. The personal computer 11 has the same configuration as that of the first embodiment, and the security key 10 is detachably attached to the personal computer 11.

When the attachment of the security key 10 to the personal computer 11 is detected, driver software 10f installed in the personal computer 10 controls USB interface circuits 10c and 10g and an OS file driver 11a or a LAN driver 11c so that data to be sent over a wireless LAN and the other all data files 11b to be handled by the personal computer 11 will be forcibly passed through the security key 10 via the USB connectors 10a and 10b.

At the same time, when a data file having been encrypted according to a cipher system supported by the security key 10 and preserved in another personal computer, server, or NAS device which is not shown is received over the wireless LAN and then opened, the driver software 10f controls a hardware encryption/decryption circuit 10d so that the hardware encryption/decryption circuit 10d will decrypt the received data file 11b using random numbers generated by a thermal noise random number generator 10e. On the other hand, when the data 11b has not yet been encrypted but is transmitted to any other personal computer, server, or NAS device over the wireless LAN and then preserved therein, the driver software 10f controls the hardware encryption/decryption circuit 10d so that the hardware encryption/decryption circuit 10d will encrypt the data using random numbers generated by the thermal noise random number generator 10e. Thereafter, the driver software 10f transmits the data to the wireless LAN adapter 12.

For example, assume that the data file 11b is created by running an application in the personal computer 11 and preserved in a server connected on the wireless LAN. In this case, first, a worker inserts his/her own security key 10 into the second USB connector 10b included in the personal computer 11. At this time, the OS in the personal computer 11 detects the insertion of the security key 10 into the USB connector 10b. In response to the detection, the driver software 10f extends control so that all the data files 11b to be handled thereafter will pass through the security key 10. When a worker performs manipulations to preserve the data file 11b in a server, the driver software 10f control the USB interface circuits 10c and 10g and OS file driver 11a so as to transmit the data 11b to the hardware encryption/decryption circuit 10d in the security key 10 via the USB connectors 10a and 10b. At the same time, the driver software 10f controls the hardware encryption/decryption circuit 10d so that the hardware encryption/decryption circuit 10d will encrypt the data. The hardware encryption/decryption circuit 10d in turn encrypts the data using random numbers generated by the thermal noise random number generator 10e. The driver software 10f controls the USB interface circuits 10c and 10g and OS file driver 11a so as to return the encrypted data 11b to the personal computer 11 via the USB connectors 10a and 10b. Moreover, the driver software 10f controls the LAN driver 11c so that the data will be transmitted to and preserved in the server via the wireless LAN adapter 12. Processing is then terminated.

On the other hand, in order to open a data file that has already been encrypted according to a cipher system supported by the security key 10 and preserved in a server connected to the personal computer 11 over a wireless LAN, a worker inserts his/her own security key 10 into the second USB connector 10b of the personal computer 11. At this time, the OS in the personal computer 11 detects the insertion of the security key 10 into the USB connector 10b. Responsively to the detection, the driver software 10f extends control so that all the data files 11b to be handled thereafter will pass through the security key 10. When a worker performs manipulations to read an encrypted data file from the server over the wireless LAN, the driver software 10f controls the USB interface circuits 10c and 10g and OS file driver 11a so as to transmit the encrypted data file 11b, which is received over the wireless LAN under the control of the OS LAN driver 11c, to the hardware encryption/decryption circuit 10d included in the security key 10 via the USB connectors 10a and 10b. At the same time, the driver software 10f controls the hardware encryption/decryption circuit 10d so that the hardware encryption/decryption circuit 10d will decrypt the data. The hardware encryption/decryption circuit 10d in turn decrypts the data using random numbers generated by the thermal noise random number generator 10e. The driver software 10f controls the USB interface circuits 10c and 10g and OS file driver 11a so as to return the decrypted data 11b to the personal computer 11 via the USB connectors 10a and 10b. Thereafter, the driver software 10f executes normal reading.

As described so far, the security key 10 is used to encrypt data, which will be transmitted or received to or from any other personal computer, server, or NAS device over a wireless LAN, according to a cipher system supported by the security key 10. Data transmitted or received over the wireless LAN is likely to be intercepted more readily than data transmitted or received over a wired LAN. According to the present embodiment, data to be transmitted or received by radio is encrypted using the thermal noise random number generator 10e. Even if the data is intercepted, it is very hard to interpret the data to the same extent as it is in the first embodiment. Great security can be guaranteed. Needless to say, the operations and advantages described in relation to the first embodiment can be provided.

The present invention is not limited to the constituent features of the present embodiment but the constituent features can be modified as described below.

The computer connected over a wireless LAN is not limited to a personal computer, a server, or a NAS device. Various types of computers capable of transmitting or receiving data over the wireless LAN will do.

The wireless LAN adapter may independently and additionally encrypt data.

The wireless LAN adapter may be of any type such as a type shaped like a PC card to be loaded into a notebook personal computer or an external type.

The constituent features of the first embodiment to which the present invention is not limited are also applied to the present embodiment, and will therefore not be reiterated.

### (Third Embodiment)

The present embodiment is different from the first embodiment in a point that the structure of a security key 10 is divided into a connector unit 13a, which includes a first USB interface circuit 10c and a first USB connector 10a, and a main key body 13b that is detachably attached to the connector unit 13a and includes a hardware encryption/decryption circuit 10d and a thermal noise random number generator 10e.

The security key 10 is USB-compatible and is therefore identified by a plug-and-play facility incorporated in a personal computer. Basically, the security key 10 can be freely attached to or detached from a personal computer 11 irrespective of whether the personal computer 11 is started up. As long as an OS residing in the personal computer is of a special type, for example, Windows® XP, any other manipulation may have to be performed in order to detach the security key. In this case, it cannot be said that the security key 11 can be handled as carelessly as keystrokes are made.

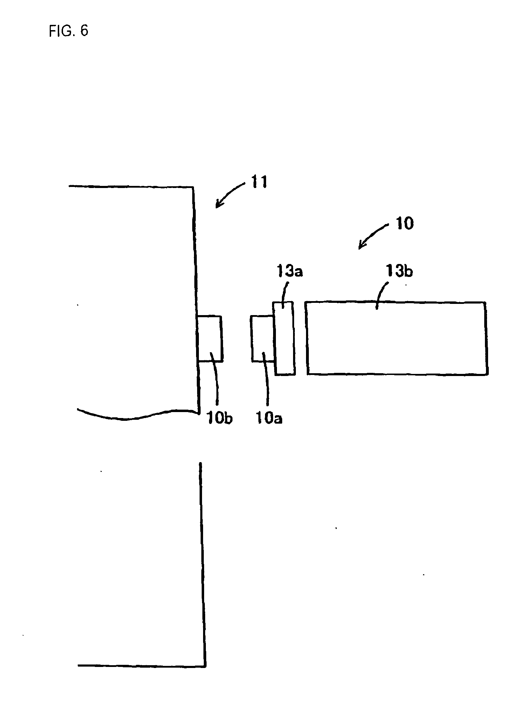

According to the present embodiment, as shown in Fig. 6, the security key 10 is divided into the connector unit 13a and the main key body 13b that is a hardware device. The main key body 13b is detachably attached to the connector unit 13a but not to the personal computer 11. The connector unit 13a is left attached to the personal computer 11, and the main key body 13b is freely detachable or attachable without the necessity of performing any other manipulations irrespective of whether the personal computer 11 is started up or what type of OS resides.

Consequently, the main key body 13b can be (indirectly) attached or detached to or from the personal computer 11 as carelessly as keystrokes are made.

Moreover, what a user carries with him/her is the main key body 13b alone. Thus, a more compact and lightweight design is accomplished.

Furthermore, since the main key body 13b is devoid of a USB connector, the number of restrictions imposed on the appearance thereof is limited. This increases the freedom in determining the appearance. For example, the main key body 13b may be designed to be as thin as a credit card so that it can be put in a wallet and readily carried.

The present invention is not limited to the constituent features of the present embodiment. The constituent features can be modified in the same manner as those of the first embodiment described previously. The modifiable constituent features will not be reiterated.

### (Fourth Embodiment)

According to the first embodiment, a security key 10 is adapted to encryption or decryption of data to be handled by the personal computer 11. According to the present embodiment, the security key 10 can also be adapted to authentication preceding authorization that grants or denies access to a computer or to a network via the computer.

A unique serial number is assigned to the CPU included in the personal computer 11, the security key 10, or a USB. Any of the serial numbers is registered in advance. When the security key 10 is attached to the personal computer, data items representing a serial number are transferred between the personal computer 11 and security key 11 and collated with each other for the purpose of authentication.

Referring to Fig. 3, a concrete control sequence will be described by taking for instance authentication preceding authorization that grants or denies access to the personal computer 11. Access to the personal computer 11 is limited by the driver software 10f. Any of serial numbers assigned to the CPU, security key 10, and USB is registered or preserved as an authentication key 11b while being encrypted according to a cipher system supported by the security key 10. When a worker wants to access the personal computer 11, he/she inserts the security key 10 into the second USB connector 10b of the personal computer 11. The driver software 10f in turn controls the USB interface circuits 10c and 10g, and transmits the authentication key 11b, which is encrypted and registered or preserved in advance, to the security key 10 via the USB connectors 10a and 10b. The hardware encryption/decryption circuit 10d decrypts the authentication key using random numbers generated by the thermal noise random number generator 10e, and returns the authentication key to the personal computer 11 via the USB connectors 10a and 10b. The driver software 10f collates the authentication key 11b, which has been returned and decrypted, with the serial number that is not encrypted but has been registered or preserved in advance. If the authentication key and serial number agree with each other, access is granted. If the authentication key and serial number disagree with each other, access is denied.

After the security key 10 is authenticated, the driver software 10f monitors the security key 10 to see if the security key 10 is detached. Every time the security key 10 is detached, the driver software 10f restricts access and repeats the foregoing control sequence of authentication preceding authorization that grants or denies access.

Authentication preceding authorization that grants or denies access to the personal computer 11 has been described as an example. The same applies to authentication preceding authorization that grants or denies access to a network. Moreover, the security control sequence described in relation to the first to third embodiments and intended to encrypt or decrypt data to be handled by the personal computer 11 can be performed at the same time.

As described so far, according to the present embodiment, the security key 10 is used to perform authentication preceding authorization that grants or denies access to the personal computer 11 or access to a network via the personal computer 11. The same excellent operation and advantage as those provided by the first embodiment in terms of encryption or decryption of data to be handled by the personal computer 11 are provided in terms of authentication preceding authorization that grants or denies access to the personal computer 11 or access to a network via the personal computer 11.

In particular, an encrypted authentication key is decrypted by the security key 10 and then collated with a serial number. Compared with a more generally adopted conventional method of entering a simple authentication key, great security can be guaranteed. Moreover, when the facility of encrypting or decrypting data, which is handled by the personal computer 11, described in relation to the first to third embodiment is used in combination, the security key 10 can provide an excellent operation and advantage, that is, can provide two-fold security by performing authentication that precedes authorization for granting or denying access to the personal computer 11 or access to a network via the personal computer 11 and by encrypting or decrypting data to be handled by the personal computer 11.

The present invention is not limited to the constituent features of the present embodiment but the constituent features can be modified as described below.

According to the present embodiment, the authentication key is based on any of the serial numbers. The present invention is not limited to the authentication key, but the authentication key may be determined according to any other method. For example, there is a method of producing the authentication key on the basis of time instant information. In this case, the security key may include a clock facility so that the clock facility can provide the time instant information. Otherwise, the security key may not include the clock facility but may access the personal computer or an NTP server or an SNTP server connected on a network so as to acquire the time instant information. Otherwise, an original fixed key may be determined.

According to the present embodiment, an authentication key registered or preserved in advance in a personal computer is considered to have been encrypted. The authentication key is decrypted using the security key and then collated with a serial number. The present invention is not limited to this mode. In contrast, the authentication key registered or preserved in advance in the personal computer may not be encrypted. The authentication key may be encrypted using the security key and then collated with the serial number.

According to the present embodiment, an authentication key registered or preserved in advance in a personal computer is considered to have been encrypted. The authentication key is decrypted using the security key and then collated with a serial number. The present invention is not limited to this mode. The authentication key may not be encrypted or decrypted. A storage device may be included in the security key, and the authentication key may be transmitted to the personal computer. The driver software then collates the received authentication key with the one stored in the personal computer for the purpose of authentication. In this case, since encryption or decryption is not performed, security is a little degraded. However, it is unnecessary to enter the authentication key every time the security key is used. Authentication work can be achieved as readily as keystrokes are made, and the other operation and advantage are provided as well.

The facility of encrypting or decrypting data to be handled by a personal computer which is included in the first to third embodiment may be excluded, but the authentication facility included in the present embodiment may be included solely.

The security key may be designed as a so-called smart key. In this case, a battery power supply and a radio transmission/reception facility for transmitting or receiving data of an authentication key by radio may be added to the security key. The security key is not attached to a personal computer but is owned by a worker. The worker merely approaches the security key to the personal computer or merely holds it, whereby the authentication facility provided by the present embodiment can be activated.

The constituent features of the first embodiment to which the present invention is not limited also apply to the present embodiment. The description of the constituent features will not be described.

### (Fifth Embodiment)

According to the present embodiment, a fingerprint-collation authentication mechanism 14 is included as an authentication facility, which identifies the security key 10 in accordance with any of the first to fifth embodiments, in the security key 10. The fingerprint-collation authentication mechanism 14 comprises: a memory 14a in which a fingerprint is registered or preserved in advance; an authentication window 14b through which the fingerprint of a pressed finger is scanned; an authentication control unit 14c that collates a scanned fingerprint with a fingerprint registered or preserved in the memory so as to see if the fingerprints agree with each other, and that, only when the fingerprints agree with each other, authenticates the user of the security key so that the user will be authorized to use the facilities of the security key; and a battery power supply 14d.

In order to use the security key 10 in the mode specified in any of the first to fifth embodiments, before a user attaches the security key 10 to the personal computer 11, the user has to press his/her fingertip against the authentication window 14b of the fingerprint-collation authentication mechanism 14. Otherwise, the user cannot use the security key 10.

Actions to be performed in practice will be described below. When a worker wants to use the security key 10 for the purpose of manipulating the personal computer 11 in the mode specified in any of the first to fifth embodiments, the worker turns on the power supply of the security key 10 that is not shown, and presses his/her fingertip against the authentication window 14b of the fingerprint-collation authentication mechanism 14. The fingerprint is then scanned and acquired. The authentication control unit 14c collates a fingerprint registered or preserved in the memory 14a with the acquired fingerprint, and verifies whether the fingerprints agree with each other. If the fingerprints agree with each other, the use of the security key 10 is granted and restrictions on use are lifted. At the same time, an authentication indication is displayed on a display device that is not shown. The worker in turn attaches the security key 10 to the personal computer 11 and uses the security key 10 as specified in any of the first to fifth embodiments. On the other hand, if the fingerprints disagree with each other, the restrictions on use are left imposed. At the same time, an indication of rejected authentication is displayed on the display device that is not shown. In this case, even if the worker attaches the security key 10 to the personal computer 11, the facilities of the security key 10 are unusable.

Moreover, even when collated fingerprints agree with each other or the user of the security key 10 is authenticated, if the security key is not attached to the personal computer 11 until a certain period of time elapses, the usable facilities are limited. In order to use the facilities, the fingerprints must be collated with each other again. This prevents an event that after the user of the security key is authenticated, if the security key 10 is left unattached to the personal computer 11 or is left unused, the authenticated state continues to allow a third person who has obtained the security key 10 to use the security key 10.

Furthermore, when collated fingerprints agree with each other and the user of the security key is authenticated, the security key 10 is attached to the personal computer 11. Thereafter, if the security key 10 is detached from the personal computer 11, the security key 10 has the usable facilities thereof limited again.

As described above, according to the present embodiment, the fingerprint-collation authentication mechanism 14 that authenticates the user of the security key 10 is included. Unless the user is authenticated in advance by the security key 10, the facilities included in the first to fifth embodiments cannot be activated. Consequently, security is further intensified. In particular, when the security key 10 is stolen, unless a user is authenticated, the security key 10 does not act at all. This is helpful.

The present invention is not limited to the constituent features of the present embodiment, and the constituent features can be modified as described below.

The authentication facility that authenticates the user of a security key is not limited to the fingerprint-collation authentication facility included in the present embodiment. Alternatively, an authentication facility for authenticating the user of the security key according to any other method may be included. For example, an authentication facility that collates an iris with stored data, an authentication facility that collates a pattern of blood vessels in a hand with stored data, an authentication facility that collates an amount of intracorporeal static electricity or an intracorporeal fat ratio with stored data, or any other biomedical authentication facility will do. Otherwise, other various methods of identifying a registered individual can be adopted.

Both the facility for encrypting or decrypting data to be handled by a personal computer which is included in the first to third embodiments and the authentication facility for performing authentication that precedes authorization which grants or denies access to the personal computer or a network, which is included in the fourth embodiment, may be included. Moreover, the authentication facility for authenticating the user of a security key that is included in the present embodiment may be included solely.

The constituent features of the first to fourth embodiments to which the present invention is not limited can also apply to the present embodiment. The description of the constituent features will be omitted.

Technical ideas other than those described in "What is Claimed is," which are grasped from the foregoing embodiments, will be described below.

(1) The encryption/decryption equipment has a substantially cylindrical shape, and has an USB connector formed at one end thereof. When the USB connector is inserted into a personal computer, the other end of the USB connector juts out of the main unit of the computer. This informs a user of the fact that the encryption/decryption equipment is in use.

(2) The encryption/decryption equipment receives power from the main unit of a personal computer over a power line contained in an USB.

(3) Data to be encrypted or decrypted by the encryption/decryption equipment is transmitted or received to or from a computer to which the encryption/decryption equipment is attached, any other computer connected to the computer over a wired network or over a wireless network, or peripheral equipment while being encrypted.

(4) The peripheral equipment to or from the encryption/decryption equipment described in item (3) transmits or receives data is a network-attached storage (NAS) device.

(5) The encryption/decryption control means includes a data selector means for selecting specific data as data to be encrypted or decrypted.

(6) The data selector means included in the encryption/decryption equipment described in item (5) is used to enter an instruction, which instructs whether data should be encrypted or decrypted, every time data is handled by a computer to which the security key is attached.

(7) The data selector means included in the encryption/decryption equipment described in item (5) is used to designate in the computer in advance the kind of data to be encrypted or decrypted.

(8) The encryption/decryption control means included in the encryption/decryption equipment is driver software to be installed from a storage medium or from the Internet into a computer.

(9) The encryption/decryption control means included in the encryption/decryption equipment is driver software to be installed in a computer. The encryption/decryption equipment includes a storage device in which the driver software is preserved. When the encryption/decryption equipment is attached to a computer in which the driver software is not installed, the driver software is automatically installed from the storage device to the computer.

(10) The encryption/decryption equipment includes a mechanism for alarming a user for fear he/she may forget to detach the encryption/decryption equipment from a computer after terminating the OS residing in the computer. The alarm mechanism uses at least one of the screen included in the computer and an indicator included in the encryption/decryption equipment to give an alarm to the user of the encryption/decryption equipment attached to the computer.

(11) The encryption/decryption equipment has a string or the like that link the encryption/decryption equipment and a worker, whereby the worker is prevented from forgetting to detach the encryption/decryption equipment.

(12) Data to be encrypted or decrypted by the encryption/decryption equipment is an attachment of an e-mail message to be transmitted or received over the Internet.

(13) Encryption/decryption equipment can communicate with a computer bi-directionally. The encryption/decryption equipment comprises a radio communication mechanism that bi-directionally communicates with the computer, a battery power supply, and a hardware encryption/decryption circuit that transfers data via the radio communication mechanism, that encrypts data in response to a request for encryption, and that decrypts data in response to a request for decryption. Once the encryption/decryption equipment is located near a personal computer, although the encryption/decryption equipment is not attached to the personal computer, data to be encrypted or decrypted is automatically transferred between the personal computer and encryption/decryption equipment.

(14) The encryption/decryption equipment has a shape and a size equivalent to those of a credit card.

(15) A serial number that is encrypted in advance and a serial number that is not encrypted are registered or preserved in a computer. When encryption/decryption equipment is attached to the computer, one of the serial numbers is transmitted to the encryption/decryption equipment. The serial number is then encrypted or decrypted and then returned to the computer. The returned serial number is collated with the other serial number registered in the computer. Thus, whether the computer should be made accessible and usable is determined.

(16) Encryption/decryption equipment can bi-directionally communicate with a computer. The encryption/decryption equipment comprises: a radio communication mechanism that bi-directionally communicates with a computer by radio; a battery power supply; and a hardware encryption/decryption circuit that can transfer data via the radio communication mechanism, that encrypts data in response to a request for encryption, and that decrypts data in response to a request for decryption. Once the encryption/decryption equipment is located near the personal computer, although the encryption/decryption equipment is not attached to the personal computer, data to be encrypted or decrypted is automatically transferred between the personal computer and encryption/decryption equipment. A serial number is collated with data registered in the computer. Consequently, the computer is accessed for use.

(17) An authentication facility for authenticating the user of the encryption/decryption equipment utilizes any of an iris, a pattern of blood vessels in a hand, an amount of intracorporeal static electricity, and an intracorporeal fat ratio.

## Claims

1. An encryption/decryption system comprising a computer and external hardware that is externally attached or detached to or from the computer, that juts out of the computer when attached to the computer, and that bi-directionally communicates with the computer, wherein:
the external hardware comprises:
a first USB connector;
a first USB interface circuit that performs bidirectional communication via the first USB connector at a data transfer rate stipulated in the USB standard; and
a hardware encryption/decryption circuit that transfers data via the USB interface circuit, encrypts data in response to a request for encryption, and decrypts data in response to a request for decryption; and
the computer comprises:
a second USB connector;
a second USB interface circuit that performs bidirectional communication via the second USB connector at a data transfer rate stipulated in the USB standard; and
an encryption/decryption control means that transmits or receives data to or from the hardware encryption/decryption circuit included in the external hardware, which is USB-compatible, when the data should be encrypted or decrypted, that informs the hardware encryption/decryption circuit of the contents of processing, and that instructs the hardware encryption/decryption circuit to execute encryption or decryption.

2. Encryption/decryption equipment that is externally attached or detached to or from a computer, that juts out of the computer when attached thereto, and that bi-directionally communicates with the computer, comprising:
a first USB connector;
a first USB interface circuit that performs bidirectional communication via the first USB connector at a data transfer rate stipulated in the USB standard; and
a hardware encryption/decryption circuit that transfers data via the USB interface circuit, encrypts data in response to a request for encryption, and decrypts data in response to a request for decryption.

3. The encryption/decryption equipment according to Claim 2, further comprising a physical random number generator that generates random numbers by hardware, wherein the hardware encryption/decryption circuit uses random numbers generated by the physical random number generator to perform encryption or decryption.

4. The encryption/decryption equipment according to Claim 3, wherein the physical random number generator generates random numbers according to thermal noise caused by semiconductor devices or resistive elements incorporated in the encryption/decryption equipment.

5. The encryption/decryption equipment according to any of Claims 2 to 4, wherein:
the encryption/decryption equipment is directly and externally attached or detached to or from the computer, and comprises a first USB connector that has a first USB interface circuit incorporated therein, and a main key body that is detachably attached to the first USB connector and has a hardware encryption/decryption circuit incorporated therein; and
the main key body can always be attached or detached to or from the first USB connector, which is inserted into the computer, irrespective of whether the computer is started up or the type of operating system residing in the computer.

6. The encryption/decryption equipment according to any of Claims 2 to 5, wherein:
the computer includes an encryption/decryption control means that, if necessary, transmits or receives data to or from the attached encryption/decryption equipment, and issues a request for encryption or decryption;
when the encryption/decryption control means senses the attachment of the encryption/decryption equipment to the computer, data to be handled by the computer is forcibly passed through the encryption/decryption equipment by the encryption/decryption control means;
data to be preserved in the computer using the computer or outside the computer via the computer is preserved after automatically encrypted without the necessity of performing any other manipulations; and
for utilization of data already encrypted and preserved in the computer or outside the computer via the computer, the data is automatically decrypted without the necessity of performing any other manipulations and then utilized.

7. The encryption/decryption equipment according to any of Claims 2 to 6, wherein the encryption/decryption equipment serves as a security key that is easy to carry and that, only when attached to a computer, decrypts data, which is already encrypted and preserved in a computer or outside the computer via the computer, so that the data can be utilized.

8. The encryption/decryption equipment according to any of Claims 2 to 7, wherein the encryption/decryption equipment includes an authentication facility that performs authentication preceding authorization which grants or denies access to a computer to which the encryption/decryption equipment is attached or access to a network via the computer.

9. The encryption/decryption equipment according to Claim 8, wherein the authentication facility included in the encryption/decryption equipment registers as an authentication key data of a serial number assigned in advance uniquely to the encryption/decryption equipment, data of a serial number assigned in advance uniquely to a CPU included in a computer, or data of a serial number assigned in advance uniquely to a USB, and transmits the authentication key to a computer to which the encryption/decryption equipment is attached or receives stored data from the computer so that the authentication key can be collated with the stored data in order to determine whether the computer should be made accessible and usable.

10. The encryption/decryption equipment according to Claim 8, wherein:
the authentication facility included in the encryption/decryption equipment comprises an authentication key production means for producing an authentication key on the basis of time instant information;
only when the encryption/decryption equipment is attached to a computer, the authentication key produced by the authentication key production means is transmitted or received to or from the computer, to which the encryption/decryption equipment is attached, so that the authentication key and stored data can be collated with each other in order to determine whether the computer should be made accessible and usable.

11. The encryption/decryption equipment according to Claim 10, wherein time_instant information employed by the authentication key production means is acquired from a clock incorporated in a computer to which the encryption/decryption equipment is attached, or acquired by accessing an NTP server or an SNTP server on a network on which the computer is connected.

12. The encryption/decryption equipment according to any of Claims 2 to 11, wherein: the encryption/decryption equipment includes an authentication facility that authenticates the user of the encryption/decryption equipment; and only a person authenticated by the authentication facility can manipulate the encryption/decryption equipment attached to a computer.

13. The encryption/decryption equipment according to Claim 12, wherein: the authentication facility that authenticates the user of the encryption/decryption equipment is a fingerprint collation facility; and only a person whose fingerprint is collated with data registered in advance and agrees with the data is authenticated and duly authorized to manipulate the encryption/decryption equipment attached to a computer.

14. The encryption/decryption equipment according to any of Claims 2 to 13, wherein: a computer to which the encryption/decryption equipment is attached is connected to any other computer or peripheral equipment over a network; and data to be transferred between the computer and the other computer or peripheral equipment over the network has been encrypted by the encryption/decryption equipment.

15. An encryption/decryption method for encryption/decryption equipment comprising a first USB connector, a first USB interface circuit that performs bidirectional communication via the first USB connector at a data transfer rate stipulated in the USB standard, and a hardware encryption/decryption circuit that is connected to the USB interface circuit and encrypts or decrypts data, wherein:
the encryption/decryption equipment is externally attached or detached to or from a computer;
the encryption/decryption equipment juts out of the computer when attached to the computer;
the encryption/decryption equipment bi-directionally communicates with the computer;
the encryption/decryption equipment transfers data via the USB interface circuit;
the encryption/decryption equipment encrypts data in response to a request for encryption; and
the encryption/decryption equipment decrypts data in response to a request for decryption.
